(19) Europäisches Patentamt
European Patent Office
Office européen des brevets

(11) Veröffentlichungsnummer: **0 230 045 B1**

(12) # EUROPÄISCHE PATENTSCHRIFT

(45) Veröffentlichungstag der Patentschrift: **16.01.91 Patentblatt 91/03**

(51) Int. Cl.[5]: **D06P 3/24**, D06P 3/06, C09B 67/22, C09B 1/34

(21) Anmeldenummer: **86117968.7**

(22) Anmeldetag: **23.12.86**

(54) **Verfahren zum Färben von Polyamidfasern.**

(30) Priorität: **15.01.86 DE 3600889**

(43) Veröffentlichungstag der Anmeldung: **29.07.87 Patentblatt 87/31**

(45) Bekanntmachung des Hinweises auf die Patenterteilung: **16.01.91 Patentblatt 91/03**

(84) Benannte Vertragsstaaten: **BE CH DE FR GB IT LI**

(56) Entgegenhaltungen:
**EP-A- 0 083 299**
**EP-A- 0 092 512**
**EP-A- 0 127 579**
**EP-A- 0 153 052**
**CH-A- 433 184**

(73) Patentinhaber: **BAYER AG**
**D-5090 Leverkusen 1 Bayerwerk (DE)**

(72) Erfinder: **Harms, Wolfgang, Dr.**
**Walter-Flex-Strasse 21**
**D-5090 Leverkusen 1 (DE)**
Erfinder: **Otten, Hans-Günter, Dr.**
**Kurt-Schumacher-Ring 91a**
**D-5090 Leverkusen 1 (DE)**

**EP 0 230 045 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Gegenstand der Erfindung ist ein Verfahren zum Färben bzw. Bedrucken von Polyamidfasermaterialien nach dem Trichromieprinzip, worunter der Einsatz solcher Farbstoffe in den drei Grundtönen verstanden wird, die in jedem beliebigen Mengenverhältnis jede gewünschte Farbnuance bei gleichmäßigem Farbaufbau ergeben.

Die handelsüblichen Trichromiesysteme enthalten als Blaukomponente fast ausschließlich Farbstoffe vom Typ der 1-Amino-4-(alkanoylaminophenyl)-aminoanthrachinon-2-sulfonsäuren (vgl. z.B. EP-A 83 299, 92 512, 127 579 und 153 052) oder der 1-Amino-4-(p-acetylmethylaminophenyl)-aminoanthrachinon-2-sulfonsäure (= C.I. Acid Blue 41).

Diese an sich bewährten Farbstoffe weisen jedoch den Nachteil auf, hinsichtlich der Kombinierbarkeit nicht voll zu befriedigen. Einige Typen zeigen darüber hinaus Mängel bezüglich der Ozonechtheit und der Beständigkeit gegenüber Wasser mit höheren Härtegraden.

Es wurde nun überraschenderweise gefunden, daß man diese Nachteile ganz oder zumindest teilweise vermeiden kann, wenn man beim Trichromiefärben als Blaukomponente Farbstoffe verwendet, die in Form der freien Säure der Formel

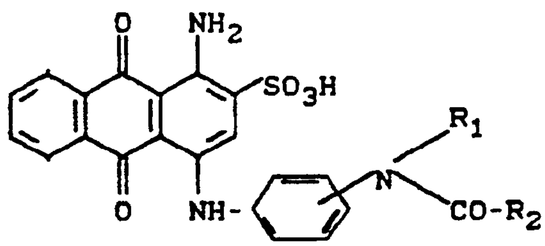

(I)

entsprechen, worin

$R_1$ und $R_2$ unabhängig voneinander $C_1$-$C_4$-Alkyl bedeuten, mit der Maßgabe, daß die Summe der C-Atome in den Resten $R_1$ und $R_2$ mindestens drei beträgt und sich die Gruppierung $-NR_1COR_2$ in m- oder p-Stellung befindet.

Bevorzugte erfindungsgemäß zu verwendende Blaufarbstoffe sind solche der Formel I, worin

$R_1$ Methyl oder Ethyl und

$R_2$ Methyl, Ethyl oder n-Propyl bedeuten,

wobei ebenfalls die vorstehend genannte Maßgabeformulierung gilt.

Besonders bevorzugt sind Farbstoffe der Formel I mit p-ständiger $NR_1COR_2$-Gruppe.

Gewünschtenfalls können diese Farbstoffe auch im Gemisch mit Blaufarbstoffen der Formel

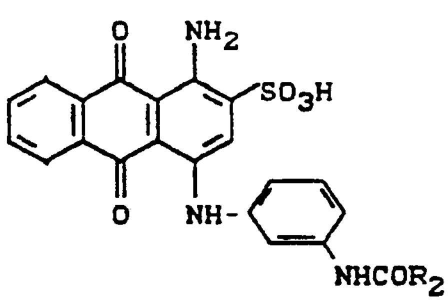

(II)

im Gewichtsverhältnis von 90 :10 bis 10 :90 eingesetzt werden.

Als Gelb/Orange- bzw. Rotfarbstoffe sind grundsätzlich alle am Markt eingeführten Säurefarbstoffe dieser Nuance geeignet.

Bevorzugt zu verwendende Gelb/Orange-Komponenten sind Farbstoffe, die in Form der freien Säure der Formel

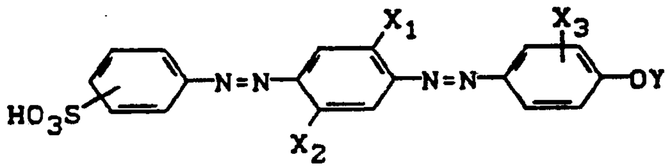 (III)

entsprechen, worin
$X_1$, $X_2$ und $X_3$ unabhängig voneinander Wasserstoff, $C_1$-$C_4$-Alkyl oder $C_1$-$C_4$-Alkoxy und
Y $C_1$-$C_4$-Alkyl oder $C_2$-$C_4$-Hydroxylalkyl
bedeuten.

Geeignete Gelbkomponenten sind weiterhin Indolazofarbstoffe gemäß DE-A 2 159 802 (entspricht US-A 3 891 619) und Nitrodiphenylaminazofarbstoffe gemäß US-A 4 060 383 und 3 994 873.

Bevorzugt zu verwendende Rotkomponenten sind Farbstoffe, die in Form der freien Säure der Formel

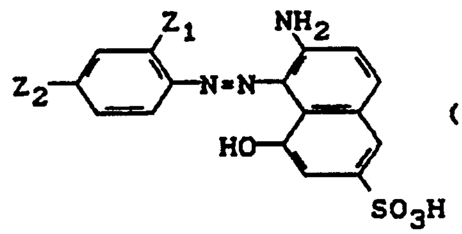 (IV)

entsprechen, worin
$Z_1$ $CF_3$, $SO_2W_1$, $SO_3W_2$ oder $SO_2NV_1V_2$ und
$Z_2$ Wasserstoff, $C_2$-$C_4$-Alkanoylamino, $C_1$-$C_4$-Alkoxy-$C_2$-$C_4$-alkanoylamino oder $C_1$-$C_5$-Alkoxy bedeuten, mit der Maßgabe, daß $Z_2$ Wasserstoff ist, wenn $Z_1$ für $SO_2W_1$, $SO_3W_2$ oder $SO_2NV_1V_2$ steht, wobei
$V_1$ $C_1$-$C_4$-Alkyl,
$V_2$ Cyclohexyl, $W_2$ oder $C_1$-$C_4$-Alkyl,
$W_1$ $C_1$-$C_4$-Alkyl oder $W_2$ und
$W_2$ gegebenenfalls durch $CH_3$ oder Cl substituiertes Phenyl bedeuten.

Bevorzugt sind Farbstoffe der Formel IV, worin $Z_1$ $CF_3$ und $Z_2$ Alkanoylamino bzw. Alkoxyalkanoylamino bedeuten, sowie solche dieser Formel, worin $Z_1$ $SO_2NV_1V_2$ und $Z_2$ H bedeuten.

Selbstverständlich können die Farbstoffe der angegebenen Formeln auch in Form ihrer wasserlöslichen Salze, insbesondere ihrer Alkali-, Ammonium- und Aminsalze vorliegen.

Die bevorzugten Mischungsverhältnisse richten sich nach der Art des angestrebten Farbtons. Besonders geeignet sind die erfindungsgemäßen Farbstoffgemische zur Erzeugung von Beige-, Braun-, Grün- und Olivnuancen.

Bevorzugte Farbstoffgemische bestehen deshalb aus
a) 10 - 45% des Farbstoffs I oder I + II,
b) 40 - 60% des Farbstoffs III,
c) 5 - 25% des Farbstoffs IV.

Als Polyamidfasermaterialien kommen solche aus Wolle, Seide und vor allem aus synthetischen Polyamiden in Betracht.

Diese Materialien können als Stück- oder Strangware vorliegen. Bevorzugt ist die Verwendung der Farbstoffe der Formel I zum Trichromie-Färben von Teppichware aus synthetischen Polyamiden.

Die genannten Fasermaterialien können nach den üblichen Färbeverfahren bei Flottenverhältnissen von 1 : 1,5 bis 1 : 30 gefärbt werden.

Bevorzugt ist indessen das Färben unterhalb Kochtemperatur mit "pH-Wert-Gleitung", wie es z.B. in Melliand Textilberichte 58 (1977), 48 - 51 beschrieben ist. Besonders geeignet ist außerdem das sogenannte Kaltverweilverfahren.

Die erfindungsgemäß zu verwendenden Blaufarbstoffe zeichnen sich in der Kombination durch ein ausgezeichnetes Ton-in-Ton-Aufbauvermögen aus, was zur Erzielung höchster Egalität der Färbungen führt.

Auf Grund der Tatsache, daß die Farbstoffmischungen diese Eigenschaften auch bei niederen Färbetemperaturen aufweisen, kann unter faserschonenden und energieeinsparenden Bedingungen gefärbt werden, so daß außerdem die Bildung von Quer- und Längsbrüchen bei Stückware weitgehend vermieden werden kann.

Neben diesen Vorzügen und den eingangs erwähnten Vorteilen zeichnen sich die Blaufarbstoffe der Formel I in der Trichromie durch das Fehlen des unerwünschten "catalytic fading"-Effektes aus.

Die vorstehend für das Trichromiefärben vorgeschlagenen Einzelfarbstoffe sind im übrigen fast ausschließlich bekannt, und beispielsweise in folgender Patentliteratur beschrieben.

DE-C 2 710 152 (entspricht US-A 4 146 363)
DE-A 2 063 907 (entspricht z.T. US-A 3 862 119)
DE-C 1 794 389 (entspricht US-A 3 951 590).

Neu sind indessen Blaufarbstoffe der Formeln

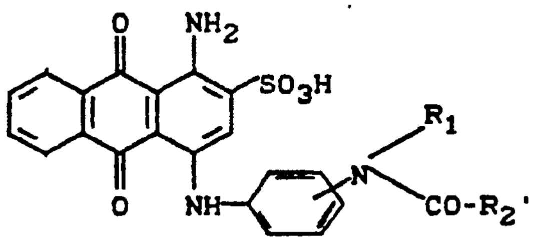 (Va)

worin $R_2'$ für $C_2$-$C_4$-Alkyl, vorzugsweise Ethyl steht, wobei $R_1$ die obengenannte Bedeutung hat und

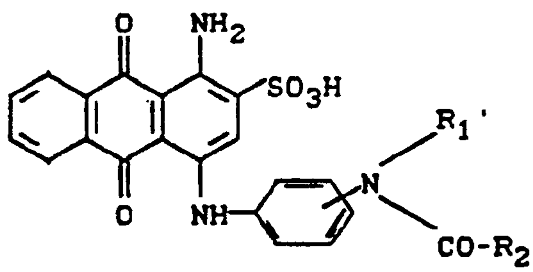 (Vb)

worin
$R_1'$ für $C_3$-$C_4$-Alkyl steht,
und
$R_2$ die obengenannte Bedeutung hat,
wobei die Farbstoffe Va mit m-, insbesondere p-ständiger $NR_1COR_2'$-Gruppierung besonders bevorzugt sind.

Die Farbstoffe der Formel Va/Vb zeigen die oben erwähnten wertvollen Eigenschaften in besonders hohem Maße und sind deshalb ebenfalls Gegenstand der vorliegenden Erfindung.

Die Herstellung der neuen Farbstoffe erfolgt nach an sich bekannten Methoden (vgl. DE-C 469 565, 542 499 und bes. 538 310.

Die in den nachfolgenden Beispielen genannten Farbstoffe werden ausschließlich als Natriumsalze eingesetzt.

Unter % wird im Rahmen dieser Erfindung Gewichts-% verstanden.

Beispiel 1

0,02 g des blauen Anthrachinon-Farbstoffes der Formel A
0,022 g des Orangefarbstoffes der Formel D und
0,015 g des Rotfarbstoffes der Formel E
werden in insgesamt 100 $cm^3$ entionisiertem Wasser heiß gelöst. Nach Zugabe von 5 $cm^3$ 10%iger Ammoniumacetatlösung wird mit entionisiertem Wasser auf ein Volumen von 500 $cm^3$ verdünnt. In diesem Färbebad gibt man einen Abschnitt eines ungefärbten Schnittflorteppichs mit einem Polanteil von 10 g Polyamid 6 (Veloursware mit Polypropylenbändchenrücken) und und erhitzt innerhalb 20 Minuten zum Kochen. Nach halbstündigem Kochen setzt man 4 $cm^3$ 10%ige Essigsäure zu und hält eine weitere halbe Stunde auf Kochtemperatur. Danach wird der Teppichabschnitt aus dem Färbebad entnommen, gespült und bei 70 - 80° getrocknet. Man erhält eine sehr gleichmäßige Braunfärbung des Teppichabschnittes, die

gute Licht- und Naßechtheiten aufweist.

Beispiele 2 - 6

Färbungen mit ähnlichen Effekten, aber z.T. etwas abweichender Nuance erhält man, wenn man anstelle des Farbstoffes D einen der folgenden Farbstoffe einsetzt :

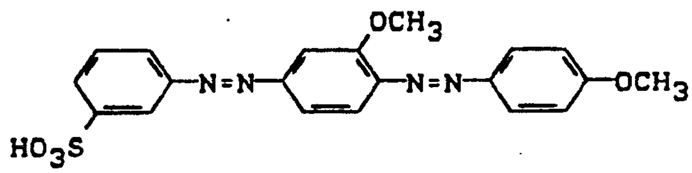
(2)

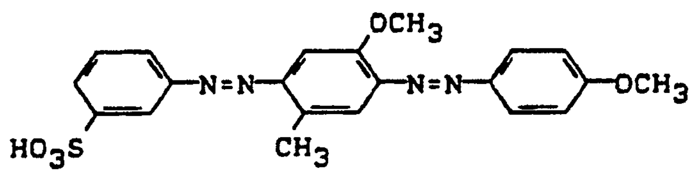
(3)

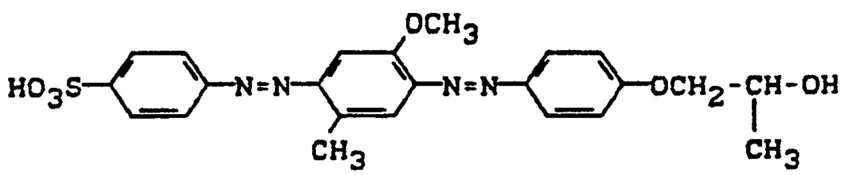
(4)

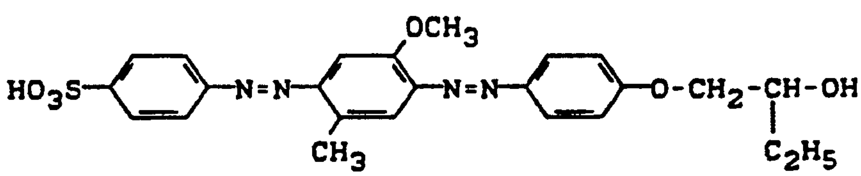
(5)

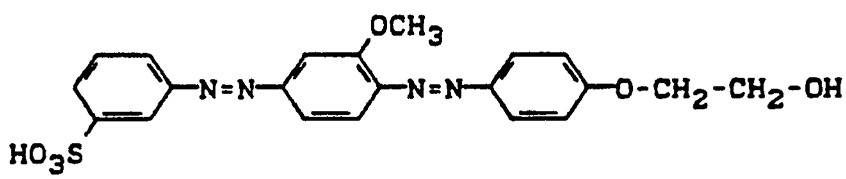
(6)

Beispiele 7 - 11

Färbungen mit ähnlichen Effekten wie in Beispiel 1 beschrieben erhält man, wenn man anstelle des Farbstoffs E einen der folgenden Rotfarbstoffe einsetzt :

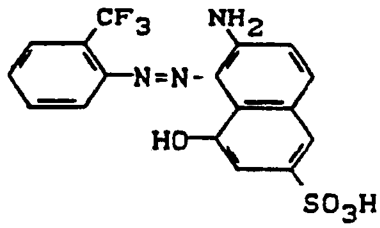

(7)

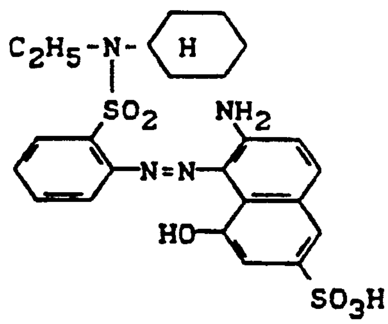

(8)

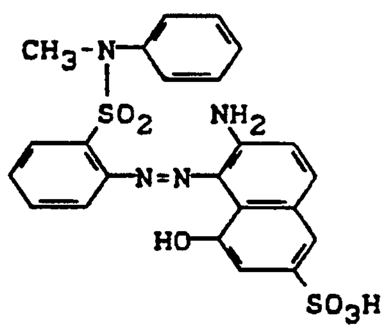

(9)

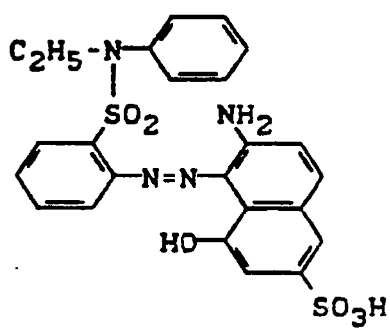

(10)

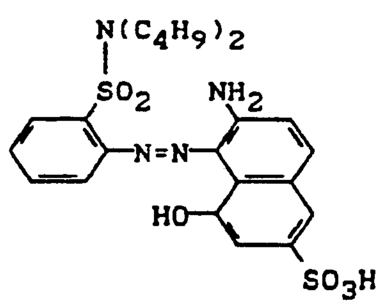

(11)

Beispiel 12

Man verfährt wie in Beispiel 1, verwendet jedoch
0,023 g des gelben Farbstoffs der Formel J
0,012 g des roten Farbstoffs der Formel E

0,012 g des blauen Farbstoffs der Formel C.

Es wird eine einwandfreie Beigefärbung erhalten.

Beispiel 13

Man verfährt wie in Beispiel 1, verwendet jedoch
0,045 g des roten Farbstoffs der Formel H
0,09 g der gelben Farbstoffe der Formeln D + K (1 :1)
0,03 g der blauen Farbstoffe der Formeln A + G (1 :1).

Man erhält eine einwandfreie Färbung in einem entsprechenden Braunton.

Beispiel 14

Getuftete Polyamidteppichware wird nach dem im oben zitierten "Melliand-Artikel" beschriebenen Verfahren unter folgenden Bedingungen gefärbt:
Farbstoffmischung : 0,13% B, 0,20% E, 0,54% K
Flottenverhältnis : 1 : 10
pH-Start : 9 ; pH-Ende : 5
Gleitzeit : 90 Minuten
Temperatur-Start : 20°C ; Temperatur-Ende : 60°C
Ergebnis : Einwandfreie Olivfärbung

Beispiel 15

Man verfährt wie in Beispiel 14 verwendet jedoch eine Farbstoffkombination folgender Zusammensetzung :
0,6% B, 0,1% E und 0,5% K.
Ergebnis : Gleichmäßige Grünfärbung

Beispiel 16

In ein Färbebad, enthaltend 0,3% B, 0,4% E und 0,8% D sowie 1 g/l Ammoniumacetat, wird bei einem Flottenverhältnis von 1 : 20 ein Polyamidgewebe eingebracht. Man erhitzt nun innerhalb von 20 Minuten zum Kochen. Nach halbstündigem Kochen setzt man 10%ige Essigsäure (bis pH 5) zu und hält eine weitere halbe Stunde auf Kochtemperatur. Danach wird das Gewebe aus dem Färbebad entnommen, gespült und bei 70 - 80° getrocknet. Man erhält eine sehr gleichmäßige Braunfärbung, mit guten Echtheiten.

Beispiel 17

Man verfährt wie in Beispiel 16, verwendet jedoch
0,2% des Rotfarbstoffs der Formel L
0,55% des Gelbfarbstoffs der Formel F
0,1% der Blaufarbstoffe der Formeln A und G (1 :1).

Man erhält eine rotstichige Braunfärbung.

Beispiel 18

Ein Velourstepplich aus Polyamid 6 mit einem Quadratmetergewicht von 700 g wird in breiter Form mit 250% (bezogen auf das Warengewicht) einer Färbeflotte begossen, welche auf 1000 Teile die folgenden Komponenten enthält :
0,15 Teile des Farbstoffs B
0,16 Teile des Farbstoffs E
0,35 Teile des Farbstoffs D
3,00 Teile Indalca
3 Teile eines handelsüblichen Koazervatbildners
10,00 Teile Essigsäure 60%
1,00 Teile Netzmittel.

Anschließend rotiert der so begossene Teppich während 18 Stunden bei Raumtemperatur auf einer

Kaule, welche langsam um die eigene Achse rotiert und wobei die Kaule luftdicht mit einer Plastikfolie umwickelt wird. Nach der erfolgten Fixierung der Farbstoffe wird der Teppich gespült und getrocknet. Man erhält eine gut fixierte, sehr gleichmäßige Olivfärbung. Das Material zeigt keinerlei Flordeformation.

Beispiel 19

50 g 1-amino-4-brom-anthrachinon-2-sulfonsaures Natrium
50 g Natriumhydrogencarbonat und
30 g N-(4-Aminophenyl)-N-methylpropionamid
werden in 750 ml Wasser unter Stickstoffatmosphäre auf 60° erwärmt. Man setzt zu dem Ansatz 1 g Kupfer(I)-chlorid, hält weiter auf 60° und setzt alle 2 Stunden nochmals 1 g Kupfer(I)-chlorid nach. Nach 8 Stunden kühlt man ab, saugt die ausgefallenen Kristalle bei 20° ab und wäscht den Filterkuchen mit 4%iger Natriumchloridlösung.

Der Filterkuchen wird in 750 ml Wasser auf 80° erwärmt, man läßt zu der Suspension 50 ml konzentrierte Salzsäure in 20 Minuten zutropfen, rührt 5 Minuten nach, saugt die Fällung heiß ab und wäscht den Filterkuchen mit 1 l 60° warmer 2%iger Salzsäure. Der so erhaltene Farbstoff der Formel A kann entweder bei 50° im Umluftschrank getrocknet oder nach Neutralisation in 500 ml Wasser mit Sodalösung und Eindampfen im Rotationsverdampfer oder Schaufeltrockner in Form des Natriumsalzes als blaues Pulver gewonnen werden.

Beispiel 20

20 g 1-Amino-4-(4'-methylamino-phenylamino)-anthrachinon-2-sulfonsäure werden in 500 ml Wasser und 50 ml Aceton mit Sodalösung neutralisiert. Man läßt in einer Stunde 12 g Propionylchlorid zutropfen und hält im Reaktionsgemisch den pH-Wert durch Zutropfen von Sodalösung auf 5,5-6,0, rührt noch 45 Minuten und kontrolliert chromatographisch auf vollständige Umsetzung. Den teilweise ausgefällten Farbstoff scheidet man durch Zusatz von 25%iger Natriumchlorid vollständig ab, saugt die blaue Fällung ab und wäscht den Filterkuchen mit 10%iger und 5%iger Natriumchloridlösung. Man erhält auf diese Weise ebenfalls einen mit dem Farbstoff der Formel A identischen Farbstoff.

Beispiel 21

Den Farbstoff der Formel C erhält man, wenn man die in Beispiel 20 eingesetzte Anthrachinonverbindung mit n-Butyrylchlorid statt mit Propionylchlorid umsetzt.

Die in den vorstehend aufgeführten Beispielen genannten Farbstoffe entsprechen folgenden Formeln:

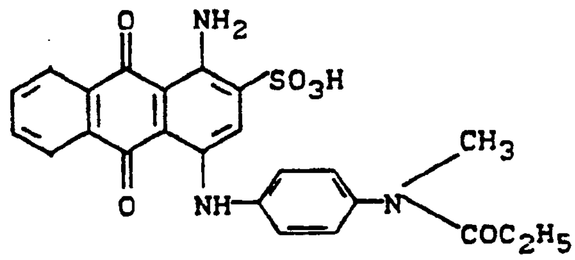

(A)

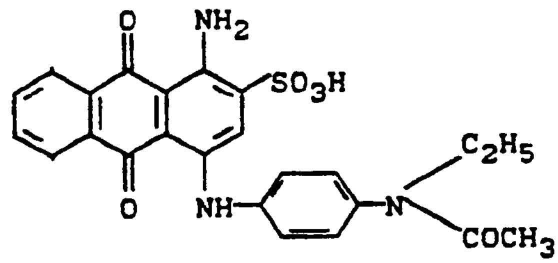

(B)

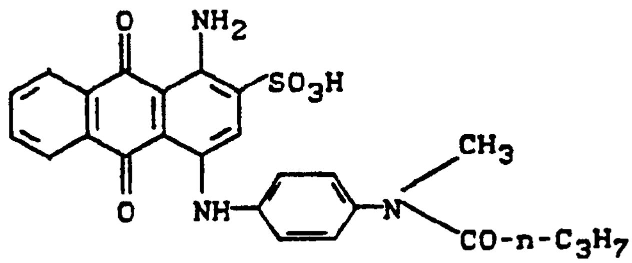

(C)

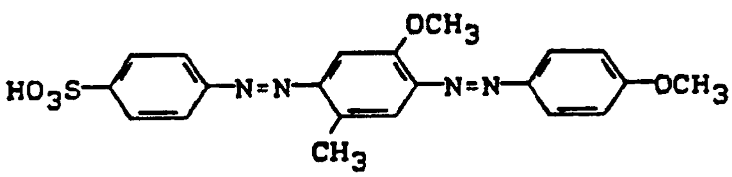

(D)

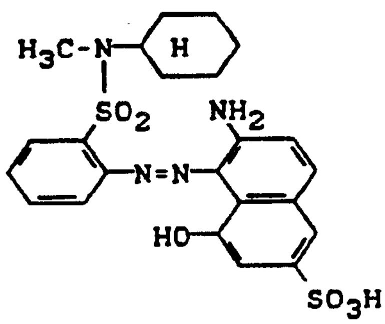

(E)

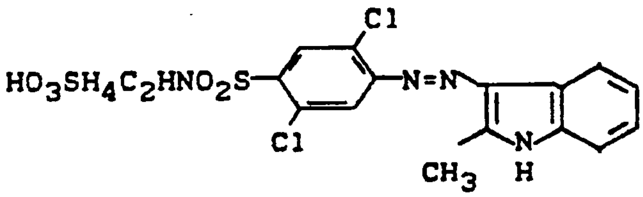

(F)

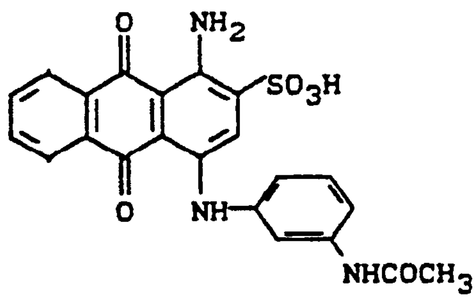

(G)

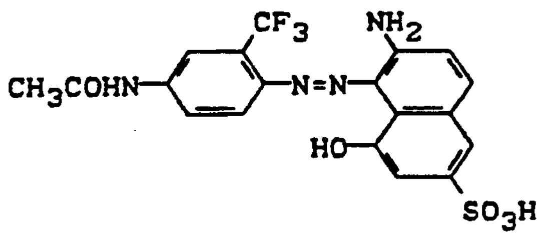

(H)

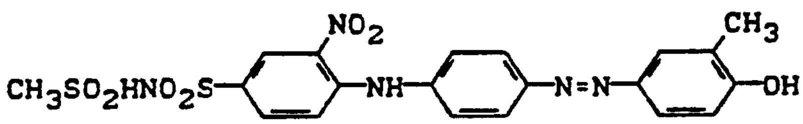

(J)

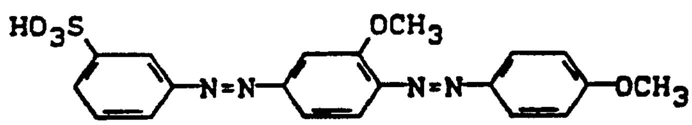

(K)

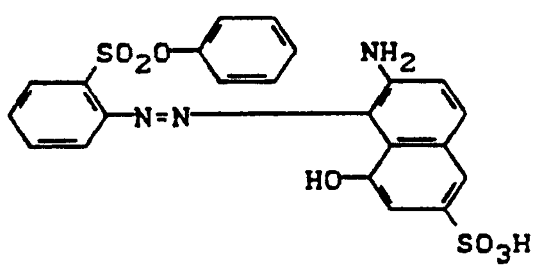

(L)

Beispiel 22

50 g 1-amino-4-brom-anthrachinon-2-sulfonsaures Natrium,
50 g Natriumhydrogencarbonat und
26,5 g N-(4-Aminophenyl)-N-methylpropionamid
werden in 500 ml Wasser unter Stickstoffatmosphäre auf 65°C erwärmt. Man setzt zu dem Ansatz 1 g Kupfer-(I)-chlorid und hält die Temperatur 6 Stunden auf 65°C. Danach setzt man nochmals 0,5 g Kupfer-(I)-chlorid hinzu, steigert die Temperatur auf 80° und hält den Ansatz weitere 3 Stunden auf 80°C. Anschließend läßt man bei 70°C etwa 50 ml konzentrierte Salzsäure zutropfen, bis ein pH-Wert von 1 erreicht ist. Die kristalline Fällung wird abgesaugt und der Filterkuchen mit einer 70°C warmen 2%igen Salzsäure, die 5% Natriumchlorid gelöst enthält, und anschließend mit 750 ml 5%iger Natriumchloridlösung gewaschen. Der erhaltene Farbstoff wird bei 60°C im Umluftschrank getrocknet und stellt ein dunkelblaues kristallines Produkt dar (Formel A).

## Ansprüche

1) Verfahren zum Färben bzw. Bedrucken von Polyamidfasermaterialien nach dem Trichromieprinzip, dadurch gekennzeichnet, daß man als Blaukomponente mindestens einen Farbstoff verwendet, der in Form der freien Säure der Formel

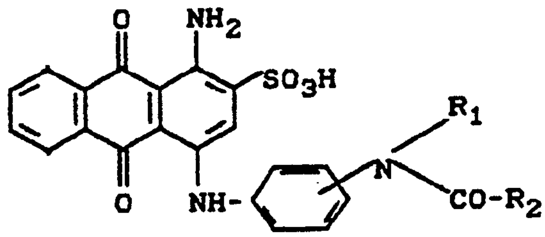

(I)

entspricht, worin
$R_1$ und $R_2$ unabhängig voneinander $C_1$-$C_4$-Alkyl bedeuten, mit der Maßgabe, daß die Summe der C-Atome in den Resten $R_1$ und $R_2$ mindestens drei beträgt und sich die Gruppierung $-NR_1COR_2$ in m- oder p-Stellung befindet.

2) Verfahren nach Anspruch 1, dadurch gekennzeichnet, daß man als Blaukomponente einen Farbstoff der angegebenen Formel verwendet, worin
$R_1$ Methyl oder Ethyl und
$R_2$ Methyl, Ethyl oder n-Propyl bedeuten,
wobei ebenfalls die vorstehend genannte Maßgabeformulierung gilt.

3) Verfahren nach Anspruch 2, dadurch gekennzeichnet, daß man als Blaukomponente einen Farbstoff der angegebenen Formel verwendet, worin sich die $NR_1COR_2$-Gruppe in p-Stellung befindet.

4) Verfahren nach Anspruch 1, dadurch gekennzeichnet, daß man als Blaufarbstoff den Farbstoff der Formel

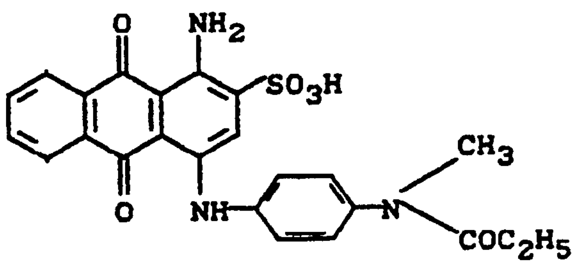

verwendet.

5) Verfahren nach Anspruch 1, dadurch gekennzeichnet, daß man als Blaufarbstoff den Farbstoff der Formel

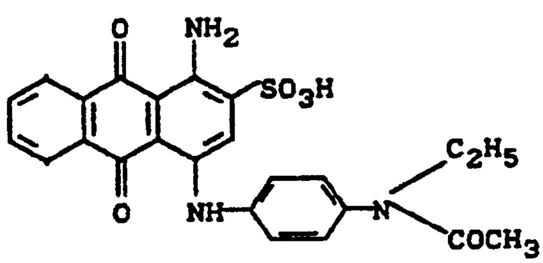

verwendet.

6) Verfahren nach Anspruch 1, dadurch gekennzeichnet, daß man als Gelb/Orange-Komponente Farbstoffe, die in Form der freien Säure der Formel

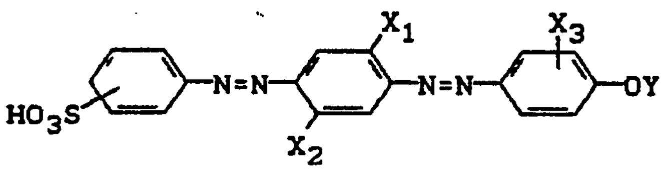 (III)

entsprechen, worin
$X_1$, $X_2$ und $X_3$ unabhängig voneinander Wasserstoff, $C_1$-$C_4$-Alkyl oder $C_1$-$C_4$-Alkoxy und
Y $C_1$-$C_4$-Alkyl oder $C_2$-$C_4$-Hydroxylalkyl
bedeuten, verwendet und als Rotkomponente Farbstoffe, die in Form der freien Säure der Formel

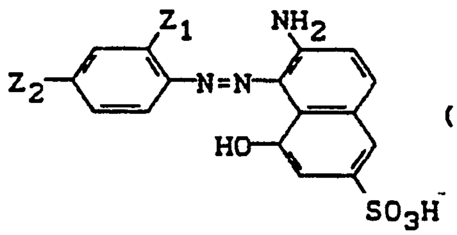 (IV)

entsprechen, worin
$Z_1$ $CF_3$, $SO_2W_1$, $SO_3W_2$ oder $SO_2NV_1V_2$ und
$Z_2$ Wasserstoff, $C_2$-$C_4$-Alkanoylamino, $C_1$-$C_4$-Alkoxy-$C_2$-$C_4$-alkanoylamino oder $C_1$-$C_5$-Alkoxy bedeuten, mit der Maßgabe, daß $Z_2$ Wasserstoff ist, wenn $Z_1$ für $SO_2W_1$, $SO_3W_2$ oder $SO_2NV_1V_2$ steht, wobei
$V_1$ $C_1$-$C_4$-Alkyl,
$V_2$ Cyclohexyl, $W_2$ oder $C_1$-$C_4$-Alkyl,
$W_1$ $C_1$-$C_4$-Alkyl oder $W_2$ und
$W_2$ gegebenenfalls durch $CH_3$ oder Cl substituiertes Phenyl bedeuten,
verwendet.

7) Verfahren nach Anspruch 1, dadurch gekennzeichnet, daß man Teppichware aus synthetischem Polyamid färbt.

8) Farbstoffe der Formel

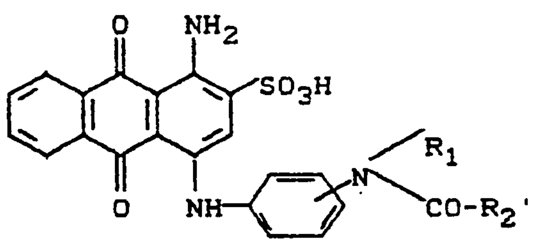 (Va)

worin $R_2'$ für $C_2$-$C_4$-Alkyl, vorzugsweise Ethyl steht, wobei $R_1$ für $C_1$-$C_4$-Alkyl steht und die Gruppierung -$NR_1COR_2'$ sich in der m- oder p-Stellung befindet.

9) Farbstoffe der Formel

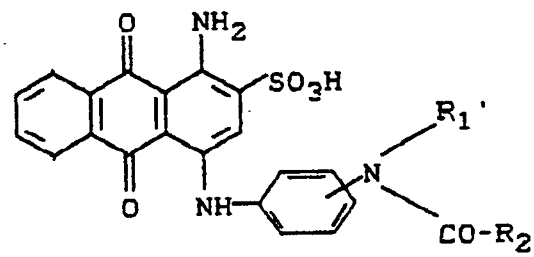

(Vb)

worin
$R_1$ für $C_3$-$C_4$-Alkyl vorzugsweise n-Propyl und n-Butyl steht,
und
$R_2$ für $C_1$-$C_4$-Alkyl steht, wobei die Gruppierung $-NR_1'COR_2$ sich in der m- oder p-Stellung befindet.

10) Farbstoff der Formel

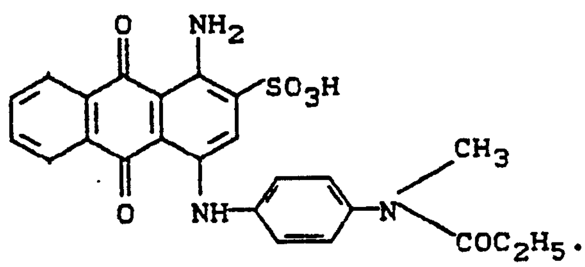

## Claims

1) Process for dyeing or printing polyamide fibre materials by the trichromatic principle, characterized in that the blue component used is at least one dyestuff which, in the form of a free acid, conforms to the formula

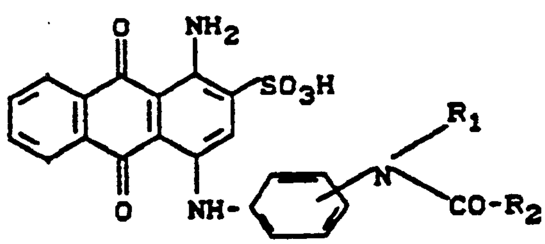

(I)

in which
$R_1$ and $R_2$ independently of each other denote $C_1$-$C_4$-alkyl, with the proviso that the total number of C atoms in the radicals $R_1$ and $R_2$ is at least three and the $-NR_1COR_2$ grouping is situated in the m- or p-position.

2) Process according to Claim I, characterized in that the blue component used is a dyestuff of the indicated formula in which
$R_1$ denotes methyl or ethyl and
$R_2$ denotes methyl, ethyl or n-propyl, which is again subject to the abovementioned proviso.

3) Process according to Claim 2, characterized in that the blue component used is a dyestuff of the indicated formula in which the $NR_1COR_2$ group is situated in the p-position.

4) Process according to Claim 1, characterized in that the blue dyestuff used is the dyestuff of the formula

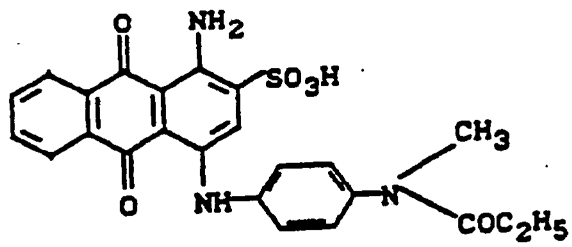

5) Process according to Claim 1, characterized in that the blue dyestuff used is the dyestuff of the formula

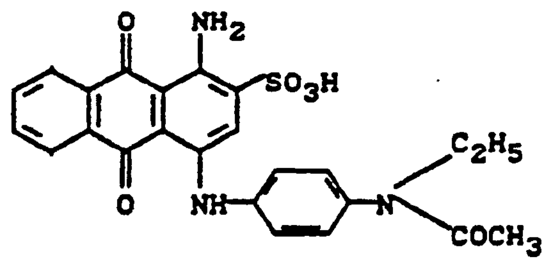

6) Process according to Claim 1, characterized in that the yellow/orange component used comprises dyestuffs which, in the form of the free acid, conform to the formula

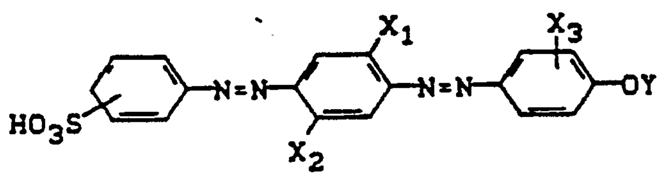

(III)

in which
$X_1$, $X_2$ and $X_3$ independently of one another denote hydrogen, $C_1$-$C_4$-alkyl or $C_1$-$C_4$-alkoxy and
Y denotes $C_1$-$C_4$-alkyl or $C_2$-$C_4$-hyroxyalkyl,
and the red component used comprises dyestuffs which, in the form of the free acid, conform to the formula

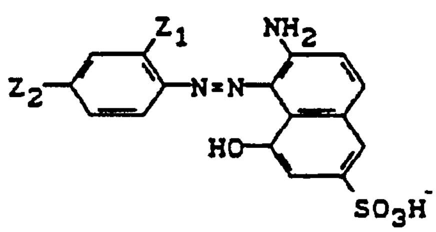

(IV)

in which
$Z_1$ denotes $CF_3$, $SO_2W_1$, $SO_3W_2$ or $SO_2NV_1V_2$ and
$Z_2$ denotes hydrogen, $C_2$-$C_4$-alkanoylamino, $C_1$-$C_4$-alkoxy-$C_2$-$C_4$-alkanoylamino or $C_1$-$C_5$-alkoxy,
with the proviso that $Z_2$ is hydrogen when $Z_1$ stands for $SO_2W_1$, $SO_3W_2$ or $SO_2NV_1V_2$, where
$V_1$ denotes $C_1$-$C_4$-alkyl,
$V_2$ denotes cyclohexyl, $W_2$ or $C_1$-$C_4$-alkyl,
$W_1$ denotes $C_1$-$C_4$-alkyl or $W_2$ and
$W_2$ denotes optionally $CH_3$- or Cl-substituted phenyl.

7) Process according to Claim 1,characterized in that the carpet material made of synthetic polyamide is dyed.

8) Dyestuffs of the formula

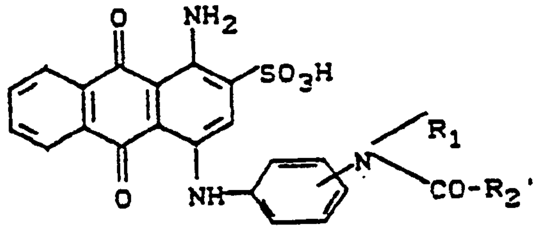

(Va)

in which
$R_2'$ represents $C_2$-$C_4$-alkyl, preferably ethyl,
$R_1$ representing $C_1$-$C_4$-alkyl and the grouping $-NR_1COR_2'$ being situated in the m- or p-position.

9) Dyestuffs of the formula

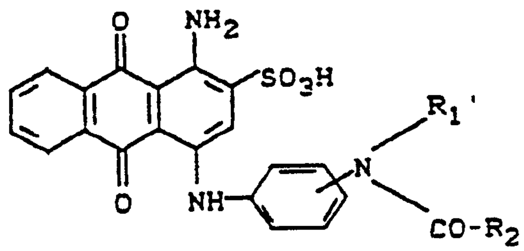

(Vb)

in which
$R_1'$ stands for $C_3$-$C_4$-alkyl, preferably n-propyl and n-butyl, and
$R_2$ represents $C_1$-$C_4$-alkyl, the grouping $-NR_1'COR_2$ being situated in the m- or p-position.

10) Dyestuff of the formula

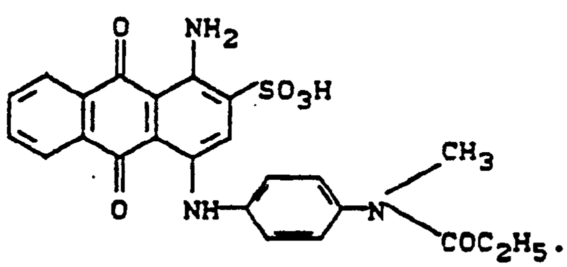

## Revendications

1. Procédé de teinture ou d'impression de matières en fibres de polyamide selon le principe de la trichromie, caractérisé en ce qu'on utilise comme composant bleu au moins un colorant qui, sous la forme de l'acide libre, répond à la formule

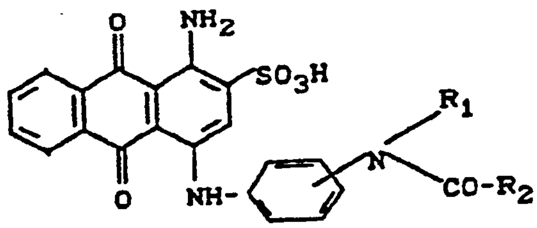

(I)

dans laquelle

$R_1$ et $R_2$ représentent indépendamment l'un de l'autre un groupe alkyle en $C_1$ à $C_4$, sous réserve que la somme des atomes de carbone dans les restes $R_1$ et $R_2$ ait au moins la valeur trois et que le groupement $-NR_1COR_2$ se trouve en position méta ou para.

2. Procédé suivant la revendication 1, caractérisé en ce qu'on utilise comme composant bleu un colorant de la formule indiquée, dans laquelle

$R_1$ est un groupe méthyle ou éthyle et

$R_2$ est un groupe méthyle, éthyle ou n-propyle, la réserve formulée ci-dessus étant valable dans ce cas également.

3. Procédé suivant la revendication 2, caractérisé en ce qu'on utilise comme composant bleu un colorant de la formule indiquée dans laquelle le groupe $NR_1COR_2$ se trouve en position para.

4. Procédé suivant la revendication 1, caractérisé en ce qu'on utilise comme colorant bleu le colorant de formule

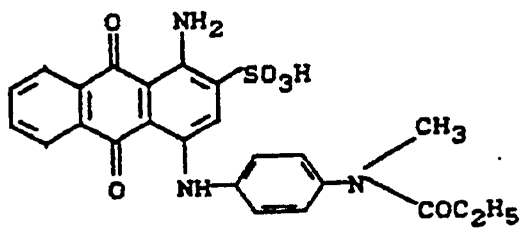

5. Procédé suivant la revendication 1, caractérisé en ce qu'on utilise comme colorant bleu le colorant de formule

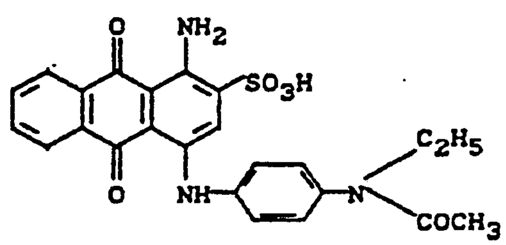

6. Procédé suivant la revendication 1, caractérisé en ce qu'on utilise comme composant jaune/orangé des colorants qui, sous la forme de l'acide libre, répondent à la formule

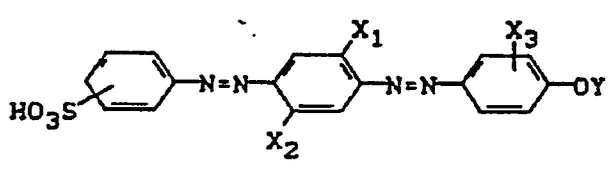

(III)

dans laquelle
$X_1$, $X_2$ et $X_3$ représentent, indépendamment les uns des autres, l'hydrogène, des groupes alkyle en $C_1$ à $C_4$ ou alkoxy en $C_1$ à $C_4$ et
Y est un groupe alkyle en $C_1$ à $C_4$ ou hydroxyalkyle en $C_2$ à $C_4$ et on utilise comme composant rouge des colorants qui, sous la forme de l'acide libre, répondent à la formule

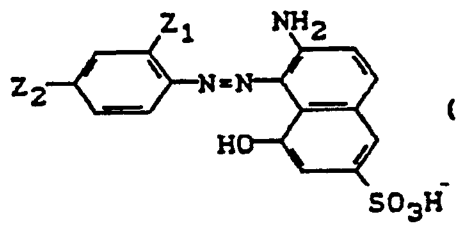

(IV)

dans laquelle
$Z_1$ est un groupe $CF_3$, $SO_2W_1$, $SO_3W_2$ ou $SO_2NV_1V_2$ et
$Z_2$ représente l'hydrogène, un groupe alcanoylamino en $C_2$ à $C_4$, (alkoxy en $C_1$ à $C_4$)-alcanoylamino en $C_2$ à $C_4$ ou alkoxy en $C_1$ à $C_6$, sous réserve que $Z_2$ représente l'hydrogène lorsque $Z_1$ est un groupe $SO_2W_1$, $SO_3W_2$ ou $SO_2NV_1V_2$, où
$V_1$ est un groupe alkyle en $C_1$ à $C_4$,
$V_2$ est un groupe cyclohexyle, $W_2$ ou alkyle en $C_1$ à $C_4$,
$W_1$ est un groupe alkyle en $C_1$ à $C_4$ ou $W_2$ et
$W_2$ est un groupe phényle portant éventuellement un substituant $CH_3$ ou Cl

7. Procédé suivant la revendication 1, caractérisé en ce qu'on teint une matière textile pour tapis en polyamide synthétique.

8. Colorants de formule

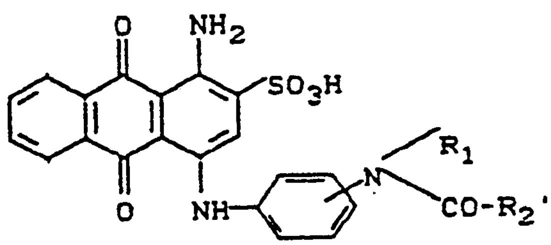

(Va)

dans laquelle $R_2'$ est un groupe alkyle en $C_2$ à $C_4$, de préférence éthyle, $R_1$ est un groupe alkyle en $C_1$ à $C_4$ et le groupement $-NR_1COR_2'$ se trouve en position méta ou para.

9. Colorants de formule

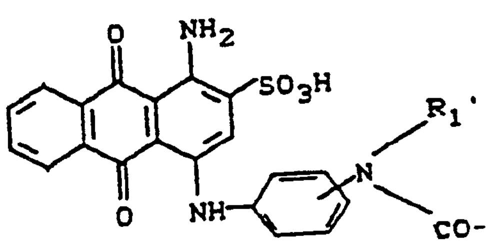

(Vb)

dans laquelle
$R_1'$ est un groupe alkyle en C3 ou C4, de préférence n-propyle et n-butyle,
et
$R_2$ est un groupe alkyle en $C_1$ à $C_4$, le groupement $-NR_1'COR_2$ se trouvant en position méta ou para. 10.

Le colorant de formule